# EUROPÄISCHE PATENTSCHRIFT

(11) **EP 1 174 599 B1**
(45) Veröffentlichungstag und Bekanntmachung des Hinweises auf die Patenterteilung: **06.04.2005**
(21) Anmeldenummer: 01117067.7
(22) Anmeldetag: 13.07.2001
(51) Int. Cl.: F01N 3/035, F01N 3/021, F01N 3/029

(54) **Filteranordnung für eine Abgasreinigungsanlage**
Filter system for an exhaust gas cleaning device
Arrangement de filtrage pour un dispositif de purification des gaz d'échappement

(30) Priorität: 21.07.2000 DE 10035544
(43) Veröffentlichungstag der Anmeldung: 23.01.2002
(73) Patentinhaber: PUReM Abgassysteme GmbH & Co. KG, 58706 Menden (DE)
(72) Erfinder: Hüthwohl, Georg, Dr.-Ing., 59494 Soest (DE); Maurer, Bernd, Dr., 58802 Balve (DE); Krutzsch, Bernd, Dr., 70599 Denkendorf (DE); Wenninger, Günter, 70599 Stuttgart (DE)
(74) Vertreter: Brückner, Ingo Andreas

(56) Entgegenhaltungen:
- EP-A- 0 325 111
- EP-A- 0 470 365
- EP-A- 0 779 096
- DE-A- 3 322 439
- DE-A- 4 203 128
- DE-C- 19 810 738
- US-A- 5 193 340
- US-A- 5 213 781
- US-A- 5 758 496

## Beschreibung

Die Erfindung betrifft eine Filteranordnung für eine Abgasreinigungsanlage einer Verbrennungsmaschine, insbesondere eines Verbrennungsmotors eines Kraftfahrzeuges, mit mehreren durch paarweise Verbindung von Filterplattenelementen gebildeten Filtertaschen.

Eine solche Filteranordnung ist aus der DE 198 10738 C1 bekannt. Die bekannte Filteranordnung ist für die Abgasreinigungsanlage eines Kraftfahrzeug-Verbrennungsmotors als Partikelfilter vorgesehen und dient insbesondere zur Rußreinigung des Abgases eines Dieselmotors. Die Filteranordnung wird durch poröse Filterplatten in Form von Sintermetallplattenringen aufgebaut, die unter paarweiser Bildung von alternierend außenund innen liegenden Filtertaschen zu einem Filterpaket miteinander verschweißt werden. Die Filteranordnung ist katalytisch inaktiv. Eine solche Filteranordnung kann mit einem Oxidationskatalysator und/oder einem Stickoxid-Reduktionskatalysator kombiniert werden, die den benötigten Bauraum für die Abgasreinigungsanlage vergrößern.

Aus der EP 0 470 365 A1 ist ferner ein Abgasfilter bekannt, welches aus einer Vielzahl von über- bzw. hintereinander angeordneten und durch Abstandshalter voneinander gehaltenen Sintermetallfilterplatten besteht. Durch diese Anordnung ist eine Vielzahl von abwechselnd aufeinander folgenden Eingangsund Ausgangskanälen gebildet. Dabei kann vorgesehen sein, dass die Filterplatten auf der Seite der Eingangskanäle mit katalytisch wirkenden Werkstoffen zur Erniedrigung der Rußkonversionstemperatur beschichtet sind.

Aufgabe der Erfindung ist es, eine Filteranordnung der eingangs genannten Art zu schaffen, die neben der Filterung von Rußpartikeln auch Rußoxidation und/oder die Reduktion von Stickoxiden ermöglicht und einen einfachen Aufbau aufweist.

Diese Aufgabe wird dadurch gelöst, daß den von ungefiltertem Abgas anströmbaren außenliegenden und abgaseintrittsseitig offenen Filtertaschen Katalysatormittel zugeordnet sind und dass die Filterplattenelemente als tellerartige Sintermetall-Filterplattenringe ausgebildet sind, die wechselseitig im Bereich ihrer äußeren und inneren Ränder fest miteinander verbunden sind. Durch die erfindungsgemäße Lösung sind in der Filteranordnung zusätzlich zu der Filterwirkung, insbesondere in Form eines Partikelfilters, noch Katalysatorfunktionen integriert, so daß die Filteranordnung multifunktional gestaltet ist. Die zusätzlichen Katalysatorfunktionen werden bei der erfindungsgemäßen Lösung erreicht, ohne das Bauvolumen oder den Bauraum für die Abgasreinigungsanlage vergrößern zu müssen. Somit wird eine äußerst platzsparende und dennoch funktionale Lösung geschaffen. Die Filterplattenelemente sind erfindungsgemäß tellerartig gestaltet und besitzen Ringform mit einem vorzugsweise zentralen Durchtritt.

In Ausgestaltung der Erfindung sind den Filtertaschen zusätzlich innenseitig Katalysatormittel zugeordnet.

In weiterer Ausgestaltung der Erfindung sind als Katalysatormittel katalytisch aktive Folien vorgesehen. Dies ist eine besonders einfache und funktionssichere Ausgestaltung. Die Folien sind vorzugsweise analog zu den Filterplattenelementen rotationssymmetrisch zur Filtermittellängsachse gestaltet. Weder Folien noch Filterplattenelemente sind jedoch grundsätzlich auf die rotationssymmetrische Gestaltung beschränkt. In gleicher Weise können sie auch eckig oder in anderer geeigneter Weise geformt sein.

In weiterer Ausgestaltung der Erfindung sind die Folien an den außen- oder innenliegenden Scheitelpunkten der Filtertaschen mit den Filterplattenelementen verbunden und ragen frei in die außen- oder innenliegenden Filtertaschen, insbesondere radial zu einer Filtermittelachse, ab. Dadurch, daß die Folien lediglich im Bereich der Scheitelpunkte direkt mit den Filterplattenelementen in Kontakt stehen, wird durch die Folien nahezu keine Erhöhung des Abgasgegendrucks im Betrieb der Filteranordnung erzielt. Denn die Folien stellen kein zusätzliches Hindernis dar, da sie den Abgasstrom durch die Anordnung im Freiraum der Filtertaschen nahezu nicht beeinflussen.

In weiterer Ausgestaltung der Erfindung sind die Folien mit einer Versteifungsstruktur versehen. Hierdurch wird verhindert, daß die Folien im Betrieb der Filteranordnung durch die Abgasströmung und insbesondere durch entsprechende Druckpulse der Abgasströmung zu flattern beginnen. Als Versteifungsstruktur kann die jeweilige Folie insbesondere mit einer entsprechenden Prägung versehen sein.

Vorteilhaft ist es, wenn die Folien durch Stützmittel der Filtertaschen in ihrer radialen Ausrichtung fixiert sind. Hierdurch wird seitens der Filterplattenelemente eine entsprechende Stützung der Folien erzielt, indem die Filterplattenelemente mit geeigneten Stützmitteln versehen sind. Als Stützmittel können die Filterplattenringe insbesondere mit einer Noppenstruktur versehen sein, die die scheiben- oder scheibenringförmigen Folien über ihre gesamte Fläche oder über einen Teil der Fläche punktartig stützen.

In weiterer Ausgestaltung der Erfindung ist wenigstens ein Teil der Folien oxidationskatalytisch aktiv beschichtet. Dieser Teil der Folien ist vorteilhaft an den innenliegenden Scheitelpunkten der Filtertaschen festgelegt, um eintrittsseitig die entsprechende Katalysatorfunktion zu erzielen. Hierdurch ist es möglich, im Abgas auftretenden Ruß zu oxidieren, was insbesondere bei Dieselmotoren vorteilhaft ist. In gleicher Weise können die Folien auch an den außenliegenden Scheitelpunkten mit den Filterplattenelementen verbunden sein, so daß sie nach innen abragen und somit bei von außen nach innen strömendem Abgas austrittsseitig angebracht sind. Hierdurch wird zwar die Rußoxidation nicht gefördert; es wird jedoch die Oxidation von in Abgas befindlichen HC oder CO verbessert, da austrittsseitig keine Ablagerungen von Ruß- oder anderen Festpartikeln auf der Folie vorhanden sind uns somit eine verbesserte Aktivität der Katalysatorwirkung erzielbar ist.

In weiterer Ausgestaltung der Erfindung ist wenigstens ein Teil der Folien mit einem die Stickoxidreduktion unterstützenden Katalysatormaterial aktiv beschichtet. Auch hier können die entsprechend beschichteten Folien sowohl ein- als auch austrittsseitig der Abgasströmung und damit sowohl in den nach außen offenen als auch in den nach innen offenen Filtertaschen positioniert sein.

In weiterer Ausgestaltung der Erfindung sind den Folien Dosiermittel für die Zufuhr eines Reduktionsmittels, insbesondere Ammoniak, zugeordnet. Als Dosiermittel sind insbesondere Strömungskanäle in der Filteranordnung integriert, die die Eindüsung des Ammoniaks an geeigneter Stelle gewährleisten.

Dabei ist es vorteilhaft, wenn Kanalabschnitte der Dosiermittel durch entsprechende Prägungen der Filterplattenelemente einstückig in diese integriert sind. Dadurch sind die Dosierkanäle zumindest teilweise in den Filterplattenelementen aufgenommen. Dies ist eine besonders einfach herzustellende Anordnung, die keine zusätzlichen Bauteile benötigt.

Weitere Vorteil und Merkmale der Erfindung ergeben sich aus den Ansprüchen sowie aus der nachfolgenden Beschreibung von bevorzugten
Ausführungsbeispielen der Erfindung, die anhand der Zeichnungen dargestells sind.
- **Fig. 1**: zeigt schematisch in einer Längsschnittdarstellung eine Ausführungsform einer erfindungsgemäßen Filteranordnung mit austrittsseitig angeordneten, katalytisch aktiven Folien,
- **Fig. 2**: eine zu Fig. 1 ähnliche Ausführungsform mit eintrittsseitig angeordneten, katalytisch aktiven Folien,
- **Fig. 3**: eine weitere Ausführungsform gemäß der Erfindung, bei der sowohl ein- als auch austrittsseitig katalytisch aktive Folien vorgesehen sind,
- **Fig. 4**: eine weitere Ausführungsfom einer erfindungsgemäßen Filteranordnung, bei der austrittsseitig angeordneten, katalytisch aktiven Folien Dosiermittel für die Zufuhr eines Reduktionsmittels zugeordnet sind,
- **Fig. 5**: eine Ausführungsform einer erfindungsgemäßen Filteranordnung ähnlich Fig. 4, wobei zusätzlich noch eintrittsseitig katalytische aktive Folien vorgesehen sind, und
- **Fig. 6**: in einer stirnseitigen Ansicht die sternförmige Anordnung der Dosiermittel im Bereich eines Filterplattenringes der Filteranordnung nach Fig. 4 oder Fig. 5.

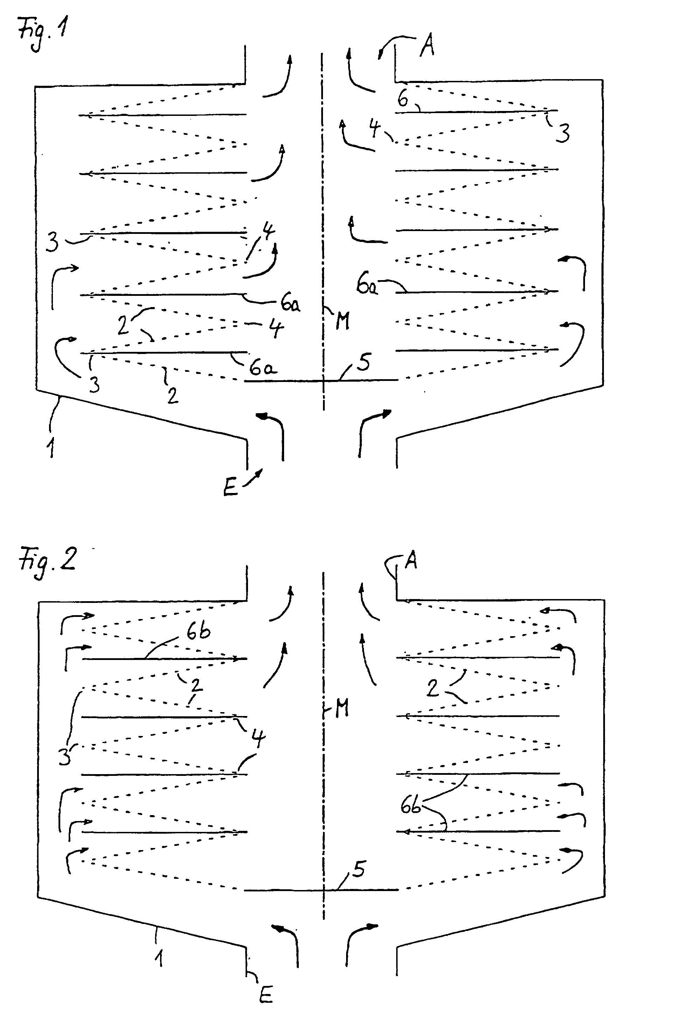

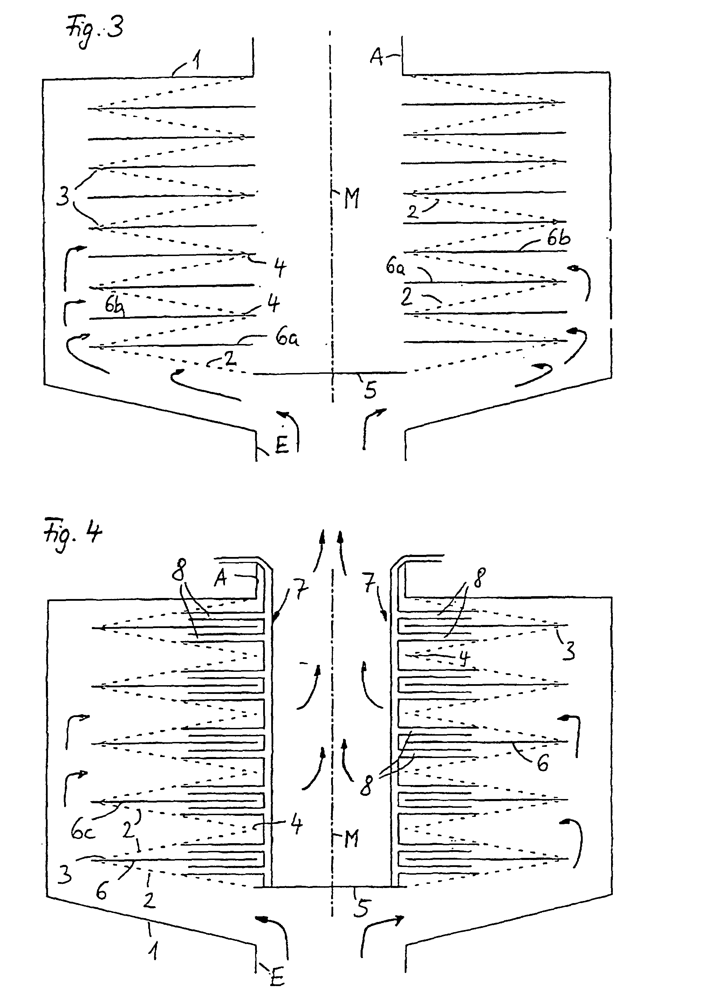

Die Filteranordnungen gemäß den Fig. 1 bis 6 sind für Abgasreinigungsanlagen von Kraftfahrzeug-Verbrennungsmotoren, insbesondere von Dieselmotoren, vorgesehen. Alle Filteranordnungen gemäß den Fig. 1 bis 6 weisen jeweils ein Filtergehäuse lauf, in dem ein Paket aus ringförmigen Filterplatten 2 angeordnet ist. Sowohl das Filtergehäuse 1 als auch das Paket aus Filterplattenringen 2 ist rotationssymmetrisch zu einer Mittellängsachse M der Filteranordnung gestaltet. Das Filtergehäuse 1 weist einen Eintritt E für die zu reinigende Abgasströmung und einen am gegenüberliegenden Ende des Filtergehäuses 1 vorgesehenen Austritt A für die gereinigte Abgasströmung auf. Die Abgasströmung ist bei allen Ausführungsbeispielen gemäß den Fig. 1 bis 5 durch entsprechende Pfeile in ihrem Verlauf optisch dargestellt, wobei die entsprechenden Pfeile lediglich symbolisch bestimmte Teilströme darstellen. Dem Fachmann ist jedoch klar, daß alle Filterplattenringe 2 innerhalb des Filtergehäuses 1 in entsprechender Weise durchströmt werden.

Die Filterplattenringe 2 sind porös gestaltet, um die Durchströmung des Abgasstromes zu gewährleisten. Beim dargestellten Ausführungsbeispiel sind die Filterplattenringe 2 als Sintermetallplatten gestaltet und tellerartig ausgeführt. Dabei sind die Filterplattenringe 2 jeweils paarweise derart zusammengefügt, daß sich zwischen jeweils zwei benachbarten Filter plattenringen jeweils außen- und innenliegende Filtertaschen ergeben. Die Filterplattenringe 2 sind sowohl im Bereich der äußeren Scheitelpunkte 3 der Filtertaschen, d. h. ihrer äußeren Ränder, als auch im Bereich ihrer inneren Scheitelpunkte 4, d. h. im Bereich ihrer inneren Ränder, umlaufend fest miteinander verbunden, vorzugsweise miteinander verschweißt. Die im Bereich des Austritts A positionierten, endseitig Filterplattenringe 2 sind mit ihren inneren Scheitelpunkten, d. h. ihren inneren Rändern, fest mit der Innenseite des Filtergehäuses 1 verbunden, insbesondere verschweißt. Die Durchlässigkeit der Filterplattenringe 2 aufgrund ihrer porösen Gestaltung als Sintermetallplatten ist durch die gestrichelte Darstellung der Filterplattenringe 2 verdeutlicht. Der zum Eintritt E benachbarte Filterplattenring 2 ist im Bereich seines inneren Durchtrittes durch eine Prallplatte 5 verschlossen, so daß die Abgasströmung, die in das Filtergehäuse 1 eintritt, gemäß der Pfeildarstellung radial zur Mittellängsachse M nach allen Seiten hin umgelenkt wird. Die Abgasströmung durchdringt dann von außen her alle Filterplattenringe 2 nach innen hin, wie anhand der Pfeildarstellung verdeutlicht ist. Vom Inneren des Paketes aus Filterplattenringen aus wird die Abgasströmung dann zum Austritt A geleitet.

Durch die poröse Gestaltung der Filterplattenringe 2 wird auf die radial von außen nach innen die Filterplattenringe 2 durchströmende Abgasströmung eine Filterwirkung ausgeübt, durch die sich entsprechende Feststoffpartikel innerhalb der Abgasströmung, wie insbesondere Ruß, an den Außenwandungen der Filterplattenringe 2 und damit im Bereich der außenliegenden Filtertaschen ablagern.

Die grundsätzliche Filterfunktion der Filteranordnungen gemäß den Fig. 1 bis 6, soweit sie bislang beschrieben worden sind, entspricht weitgehend der DE 198 10 738 C1, so daß bezüglich der Filterfunktion wie auch der paarweisen Zuordnung der Filterplatten ergänzend auf diese Druckschrift verwiesen wird.

Um für die Filteranordnungen 1 gemäß den Fig. 1 bis 6 zusätzlich noch Katalysatorfunktionen erfüllen zu können, sind den durch die Filterplattenringe 2 geschaffenen Filtertaschen katalytisch aktive Folien, 6, 6a, 6b zugeordnet, die anhand der einzelnen Ausführungsbeispiele in Aufbau und Funktion nachfolgend näher beschrieben werden. Alle Folien 6, 6a, 6b sind scheibenringförmig gestaltet und im Bereich der inneren oder der äußeren Scheitelpunkte 3, 4 des Paketes der Filterplattenringe 2 zwischen jeweils zwei benachbarte Filterplattenringe 2 eingebunden. Die Folien 6 bestehen vorzugsweise aus Metallfolien, die entsprechend katalytisch aktiv beschichtet sind. Die Folien 6 können zwischen die Filterplattenringe 6 eingeschweißt sein. Die Folien 6 sind radial zur Mittellängsachse M ausgerichtet und ragen in die Mitte der im Querschnitt dreieckigen, außenoder innenliegenden Filtertaschen hinein. Die Folien 6, 6a, 6b sind somit lediglich im Bereich des jeweiligen Scheitelpunktes 3, 4 fest mit den Filterplattenringen 2 verbunden und ragen im übrigen frei in die jeweilige Filtertasche hinein ab. Die Folien 6, 6a, 6b können in nicht näher dargestellter Weise mit einer Versteifungsstruktur in Form von Verrippungen, Stegen oder Prägungen versehen sein, wodurch die Steifigkeit der jeweiligen Folien 6, 6a, 6b erhöht wird. Ergänzend oder alternativ können die Filterplattenringe 2 in ebenfalls nicht näher dargestellter Weise mit in die jeweiligen Filtertaschen hineinragenden Noppenstrukturen versehen sein, die die Folien 6, 6a, 6b zumindest teilweise von beiden Seiten her punktartig stützen. Die Noppen sind rechtwinklig zu den Folien 6 ausgerichtet und greifen von beiden Seiten an jeder Folie 6, 6a, 6b an.

Die Filteranordnungen 1 nach den Fig. 1 und 2 weisen oxidationskatalytisch aktiv beschichtete Folien 6a, 6b, auf, die beim Ausführungsbeispiel nach Fig. 1 innenseitig und damit austrittsseitig der Filterplattenringe 2 und beim Ausführungsbeispiel nach Fig. 2 außenseitig und damit eintrittsseitig der Filterplattenringe 2 angeordnet sind. Bei der austrittsseitigen Anordnung gemäß Fig. 1 wird insbesondere eine Oxidation von HC und CO im Abgasstrom erzielt, wobei die Oberfläche der Folien 6a in ihrer Aktivität durch Ablagerungen nicht beeinträchtigt ist. Denn diese Ablagerungen werden außenseitig, d. h. abgaseintrittsseitig, an den Filterplattenringen 2 abgefangen.

Bei der außenseitigen, d. h. abgaseintrittsseitigen Anordnung der Folien 6b dienen diese insbesondere zur Oxidation von Rußpartikeln innerhalb der Abgasströmung, so daß die Ablagerungen derartiger Partikel auf den Folien 6b stattfinden, wodurch die Filterplattenringe 2 durch Rußablagerungen nicht oder weniger belastet werden.

Beim Ausführungsbeispiel nach Fig. 3. wird die Katalysatoroberfläche verdoppelt, indem im Bereich aller Filtertaschen, d. h. sowohl ein- als auch austrittsseitig der Filterplattenringe 2 entsprechende oxidationskatalytisch aktive Folien 6a, 6b angeordnet sind. Dabei werden mit den außenliegende Folien 6b Funktionen und Vorteile des Ausführungsbeispiels nach Fig. 2 und den innenliegenden Folien 6a Vorteile und Funktionen des Ausführungsbeispiels nach Fig. 1 erreicht.

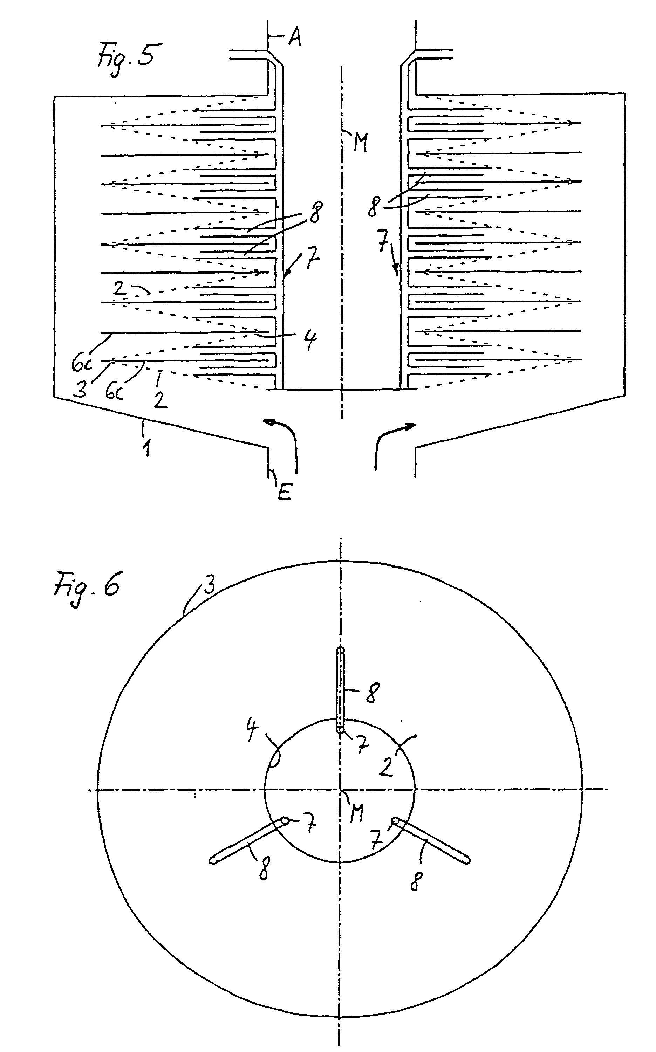

Beim Ausführungsbeispiel nach Fig. 4 weist die Filteranordnung in dem Filtergehäuse 1 katalytisch aktiv beschichtete Folien 6c auf, die zur Reduktion von Stickoxiden dienen. Die bezüglich der Stickoxidreduktion katalytisch aktiven Folien gemäß den Fig. 4 und 5 sind mit dem Bezugszeichen 6c versehen, um den Unterschied zu den oxidationskatalytisch aktiven Folien 6, 6a, 6b darzulegen. Diese Folien 6c ragen in die innenliegenden Filtertaschen hinein und sind somit austrittsseitig angeordnet. Um den Folien 6c für die katalytische Reduktion das entsprechende Reduktionsmittel zuzuführen, vorliegend Ammoniak, sind den Folien 6c Dosiermittel 7, 8 zugeordnet, die eine Eindüsung des Ammoniaks ermöglichen. Hierzu sind drei gleichmäßig über den Umfang verteilte, parallel zur Mittellängsachse M verlaufende Kanalabschnitte 7 vorgesehen (Fig. 6), die beidseitig jeder Folie 6c mit radial nach außen abragenden Abzweigungen in Form von Düsenkanälen 8 versehen sind. Die entsprechend katalytisch aktiven Folien können auch eintrittsseitig der Filterplattenringe 2 angeordnet sein. Selbstverständlich kann gemäß Fig. 5 auch die doppelte Anzahl von Folien vorgesehen sein, um die katalytisch wirksame Fläche zu verdoppeln.

Gemäß einen nicht dargestellten Ausführungsbeispiel ist es auch möglich, die bezüglich der Stickoxidreduktion katalytisch wirksamen Folien mit oxidationskatalytisch aktiven Folien zu kombinieren und außen- und/oder innenseitige Anordnungen dieser Folien im Bereich der Filtertaschen vorzusehen.

## Patentansprüche

1. Filteranordnung für eine Abgasreinigungsanlage einer Verbrennungsmaschine, insbesondere eines Kraftfahrzeugs, mit mehreren durch paarweise Verbindung von Filterplattenelementen gebildeten Filtertaschen, wobei jeweils eine von ungefiltertem Abgas anströmbare außenliegende und abgaseintrittsseitig offene Filtertasche und eine innenliegende Filtertasche gebildet ist und den außenliegenden Filtertaschen Katalysatormittel zugeordnet sind,
**dadurch gekennzeichnet, dass**
die Filterplattenelemente als tellerartige Sintermetall-Filterplattenringe ausgebildet sind, die wechselseitig im Bereich ihrer äußeren und ihrer inneren Ränder fest miteinander verbunden sind.

2. Filteranordnung nach Anspruch 1,
**dadurch gekennzeichnet, dass**
den Filtertaschen innenseitige Katalysatormittel zugeordnet sind.

3. Filteranordnung nach Anspruch 1 oder 2,
**dadurch gekennzeichnet, dass**
als Katalysatormittel katalytisch aktive Folien (6, 6a, 6b, 6c) vorgesehen sind.

4. Filteranordnung nach Anspruch 3,
**dadurch gekennzeichnet, dass**
die Folien (6, 6a, 6b, 6c) an den außen- oder innenliegenden Scheitelpunkten (3, 4) der Filtertaschen mit den Filterplattenelementen verbunden sind und frei in die außen- oder innenliegenden Filtertaschen, insbesondere radial zu einer Filtermittellängsachse (M), abragen.

5. Filteranordnung nach Anspruch 3 oder 4,
**dadurch gekennzeichnet, dass**
die Folien (6, 6a, 6b, 6c) mit einer Versteifungsstruktur versehen sind.

6. Filteranordnung nach einem der Ansprüche 3 bis 5,
**dadurch gekennzeichnet, dass**
wenigstens ein Teil der Folien (6, 6a, 6b) oxidationskatalytisch beschichtet ist.

7. Filteranordnung nach einem der Ansprüche 3 bis 6,
**dadurch gekennzeichnet, dass**
wenigstens ein Teil der Folien (6c) mit einem die Stickoxidreduktion unterstützenden Katalysatormaterial beschichtet ist.

8. Filteranordnung nach einem der Ansprüche 3 bis 7,
**dadurch gekennzeichnet, dass**
den Folien (6c) Dosiermittel (7, 8) für die Zufuhr eines Reduktionsmittels, insbesondere Ammoniak, zugeordnet sind.

## Claims

1. A filter arrangement for an exhaust gas control system of an internal combustion engine, in particular of a motor vehicle, having several filter pockets formed by the combination in pairs of filter plate elements, each being formed of an outer filter pocket onto which unfiltered exhaust gases are able to flow and which is open on the exhaust gas inlet side and an inner filter pocket with catalyst means being assigned to the outer filter pocket,
**characterised in that**
the filter plate elements are designed as plate-like sintered metal filter plate rings which are connected solidly together in the area of their outer and inner edges respectively.

2. A filter arrangement in accordance with claim 1,
**characterised in that**
internal catalyst means are assigned to the filter pockets.

3. A filter arrangement in accordance with claim 1 or 2,
**characterised in that**
catalytically active foil strips (6, 6a, 6b, 6c) are provided as catalyst means.

4. A filter arrangement in accordance with claim 3,
**characterised in that**
the foils strips (6, 6a, 6b, 6c) on the outer/inner vertexes (3, 4) of the filter pockets are connected to the filter plate elements and project freely into the outer/inner filter pockets, in particular radially to a central longitudinal axis (M) of the filters.

5. A filter arrangement in accordance with claim 3 or 4,
**characterised in that**
the foil strips (6, 6a, 6b, 6c) are provided with a reinforcing structure

6. A filter arrangement in accordance with one of claims 3 to 5,
**characterised in that**
at least a part of the foil strips (6, 6a, 6b) is coated with an oxidation-type catalytic coating.

7. A filter arrangement in accordance with one of claims 3 to 6,
**characterised in that**
at least a part of the foil strips (6c) is provided with a catalytic material which assists in the reduction of nitrogen oxide.

8. A filter arrangement in accordance with one of claims 3 to 7,
**characterised in that**
assigned to the foil strips (6c) are dosing means (7, 8) for the supply of a reduction means, in particular ammonia.

## Revendications

1. Système de filtrage pour un dispositif de purification des gaz d'échappement d'une machine à combustion interne, en particulier d'un véhicule, ayant plusieurs poches de filtrage formées par la liaison par paire d'éléments de plaques de filtre, où respectivement une poche de filtrage ouverte située à l'extérieur et du côté de l'entrée des gaz d'échappement, pouvant être traversée par un gaz d'échappement non filtré, et une poche de filtrage située à l'intérieur sont formées, et des agents catalytiques sont affectés aux poches de filtrage situées à l'extérieur,
**caractérisé en ce que**
les éléments de plaques de filtre sont conçus sous forme de plaques de filtre circulaires en métal fritté de type disque, qui sont solidement reliés réciproquement dans la zone de leurs périphéries extérieures et intérieures.

2. Système de filtrage selon la revendication 1, **caractérisé en ce que** des agents catalytiques du côté intérieur sont affectés aux poches de filtrage.

3. Système de filtrage selon la revendication 1 ou 2, **caractérisé en ce que** l'on prévoit des feuilles catalytiquement actives (6, 6a, 6b, 6c) à titre d'agents catalytiques.

4. Système de filtrage selon la revendication 3, **caractérisé en ce que** les feuilles (6, 6a, 6b, 6c) sont reliées avec les éléments de plaques de filtre sur les points d'arête situés à l'extérieur ou à l'intérieur (3, 4) et saillent librement dans les poches de filtrage situées à l'extérieur ou à l'intérieur, en particulier radialement par rapport à un axe longitudinal médian du filtre (M).

5. Système de filtrage selon la revendication 3 ou 4, **caractérisé en ce que** les feuilles (6, 6a, 6b, 6c) sont dotées d'une structure de rigidification.

6. Système de filtrage selon l'une des revendications 3 à 5, **caractérisé en ce qu'**au moins une partie des feuilles (6, 6a, 6b) est revêtue par catalyse par oxydation.

7. Système de filtrage selon l'une des revendications 3 à 6, **caractérisé en ce qu'**au moins une partie des feuilles (6c) est revêtue d'une matière catalytique favorisant la réduction de l'oxyde d'azote.

8. Système de filtrage selon l'une des revendications 3 à 7, **caractérisé en ce que** des moyens de dosage (7, 8) pour l'amenée d'un agent réducteur, en particulier de l'ammoniaque, sont affectés aux feuilles (6c).
